# FASCICULE DE BREVET EUROPEEN

(11) **EP 4 380 495 B1**
(45) Date de publication et mention de la délivrance du brevet: **21.05.2025**
(21) Numéro de dépôt: 22735835.5
(22) Date de dépôt: 17.06.2022
(51) Int. Cl.: A61C 7/08, A61C 7/14, A61C 13/00

(54) **DISPOSITIF DE SUPPORT DE PROTHÈSE DENTAIRE**
ZAHNPROTHESENSTÜTZVORRICHTUNG
DENTAL PROSTHESIS SUPPORT DEVICE

(30) Priorité: 06.08.2021 FR 2108548
(43) Date de publication de la demande: 12.06.2024
(73) Titulaire: Valere, Frédéric, 18039 Ventimiglia (IT)
(72) Inventeur: Valere, Frédéric, 18039 Ventimiglia (IT)
(74) Mandataire: Roman, Alexis
(86) Numéro de dépôt international: PCT/EP2022/066601
(87) Numéro de publication internationale: WO 2023/011791

(56) Documents cités:
- CN-U- 209 548 116
- US-A1- 2012 270 174
- US-B2- 8 651 860

## Description

### Domaine technique.

L'invention concerne un dispositif de support de prothèse dentaire.

Le domaine technique de l'invention est celui des dispositifs permettant de maintenir en place une prothèse dentaire dans la bouche d'un patient.

### État de la technique.

Les implants dentaires ou ancrages dentaires sont utilisés pour remplacer des dents manquantes. Un implant comprend généralement une vis (en titane, zircone ou polymère) insérée dans l'os du maxillaire ou de la mandibule et destinée à créer un ancrage capable de recevoir une prothèse dentaire. La mise en place de l'implant est réalisée en plusieurs étapes et se déroule généralement sous anesthésie. Durant une étape de chirurgie principale, le praticien met l'implant en place en le vissant dans l'os. Pendant une période de cicatrisation de plusieurs mois, l'os se reforme autour de l'implant et l'enserre. Une fois l'implant ancré à l'os, un pilier est mis en place pour préparer l'évasement gingival qui servira de support à la prothèse. La prothèse est enfin mise en place sur le pilier et scellée de façon définitive.

On connaît, dans l'état de la technique, le brevet US 8651860 82 qui présente un dispositif de support de prothèse dentaire comprenant une bande support, constituée d'éléments solidaires d'une prothèse dentaire. Cette bande est profilée pour recouvrir uniquement la face linguale des dents concernées, laissant libres les autres faces de ces dents (voir figures 64 et 65 de US 8651860 B2). Des projections sont conçues pour se fixer contre la face linguale des dents dans des réservations préalablement creusés sur cette même surface, permettant ainsi l'emboîtement desdites projections dans ces réservations. Toutefois, ce brevet US 8651860 B2 n'enseigne pas l'utilisation de connecteurs permettant un montage et un démontage par le patient lui-même.

On connaît également dans l'état de la technique antérieure la demande de brevet US2012/270174 A1 qui décrit un système de traitement orthodontique. Ce système comprend des arcs de travail orthodontiques, fabriqués sur mesure pour corriger la position des dents. Ces arcs intègrent des éléments de liaison fixés de manière amovible par des moyens de liaison élastiquement déformables, qui absorbent les forces parasites, évitant leur transmission aux dents voisines. 3 Contrairement à l'invention présentée, la demande de brevet US2012/270174 A1 se concentre exclusivement sur la correction orthodontique sans offrir de solution

Tant que la prothèse dentaire n'est pas installée sur le pilier, le patient se retrouve avec un espace vide dans l'arcade dentaire, au niveau du site d'implantation. Cet espace vide peut être particulièrement inesthétique et provoquer la migration indésirable d'autres dents. Des malocclusions dentaires, diastèmes ou trémas peuvent alors apparaître et perturber la fonction musculaire des mâchoires ou les relations fonctionnelles entre les dents.

L'invention vise à résoudre ces problèmes.

Un autre objectif de l'invention est de proposer un appareil dentaire qui soit particulièrement esthétique, hygiénique et confortable pour le patient.

### Présentation de l'invention.

La solution proposée par l'invention est un dispositif de support de prothèse dentaire comprenant : - une bande support solidaire d'une prothèse dentaire, - des connecteurs adaptés pour, en usage, se fixer sur des dents du patient qui encadrent un espace dentaire libre et sur lesquels s'engage de manière démontable la bande support de sorte que la prothèse dentaire vienne combler ledit espace ; - la bande support est profilée pour recouvrir la seule face linguale des dents en laissant libre les autres faces desdites dents ; - les connecteurs sont configurés pour se fixer contre la face linguale des dents ; - la bande support comprend des réservations dans lesquelles s'emboîtent de manière élastique les connecteurs.

La bande support n'étant qu'en position linguale, elle est constamment invisible et de fait particulièrement esthétique. Même si elle venait à se décolorer au contact de la fumée de cigarette ou de café, elle ne devient pas inesthétique. De plus, la bande et les connecteurs laissant totalement libre la face occlusale et incisale des dents, le patient peut parfaitement couper, mastiquer et manger sans avoir à retirer ladite bande. En outre, de par leur position linguale, les connecteurs ne sont plus une source d'inconfort et/ou d'irritation au niveau des lèvres et/ou des joues du patient. Enfin, la bande peut être facilement retirée et remplacée par le patient lui-même, sans avoir recours à un praticien.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :

Selon un mode de réalisation, la prothèse dentaire est fixée sur la bande support par collage, soudage ou emboîtage.

Selon un mode de réalisation, la prothèse dentaire présente une face linguale qui est collée sur la bande support.

Selon un mode de réalisation, la prothèse dentaire et la bande support sont une seule et même pièce unitaire moulée, usinée ou imprimée 3D.

Selon un mode de réalisation, chaque connecteur comporte une tête de connexion de forme sphérique.

Selon un mode de réalisation, chaque connecteur comporte : - une embase présentant une face de fixation adaptée pour se fixer contre la face linguale d'une dent ; - une tête de connexion dans le prolongement de l'embase et dans laquelle s'emboîte une des réservations de la bande support.

Selon un mode de réalisation, la tête de connexion est distante de l'embase, une collerette reliant ladite embase de ladite tête.

Selon un mode de réalisation, chaque connecteur comporte : - une tête de connexion dans laquelle s'emboîte une des réservations de la bande support ; - une face de fixation adaptée pour se fixer contre la face linguale d'une dent ; - la face de fixation consiste en un méplat aménagé sur la tête de connexion.

Selon un mode de réalisation, la tête de connexion a l'une des formes suivantes : ovoïde, ellipsoïde allongée, sphère, cube, parallélépipède, polyèdre, prisme, cône, pyramide, cylindre ; ou consiste en une combinaison de deux ou plusieurs de ces différentes formes.

Selon un mode de réalisation, la bande support est flexible.

Selon un mode de réalisation, la bande support est rigide.

Selon un mode de réalisation, la bande support présente des portions ou zones présentant des modules d'élasticité distincts.

Un autre aspect non couvert par la présente invention concerne un appareil d'expansion maxillaire comprenant : - une plaque d'expansion maxillaire configurée pour coopérer avec une pluralité de dents de l'arcade dentaire maxillaire d'un patient de manière à élargir le palais dudit patient ; - des connecteurs adaptés pour se fixer sur lesdites dents et sur lesquels s'engage de manière démontable la plaque d'expansion maxillaire ; - les connecteurs et la plaque coopèrent de façon à appliquer au moins une contrainte sur tendant à élargir le palais lorsque l'appareil dentaire est porté par le patient ; - la plaque d'expansion maxillaire est profilée pour recouvrir la voute palatine et la seule face linguale des dents en laissant libres les autres faces desdites dents ; - les connecteurs sont configurés pour se fixer contre la face linguale des dents ; - la plaque d'expansion maxillaire comprend des réservations dans lesquelles s'emboîtent de manière élastique les connecteurs.

Encore un autre aspect non couvert par la présente invention concerne un appareil dentaire comprenant : - un aligneur dentaire configuré pour coopérer avec au moins une dent d'une arcade dentaire d'un patient de manière à la déplacer vers une position souhaitée ; - des connecteurs adaptés pour se fixer sur des dents de l'arcade dentaire et sur lesquels s'engage de manière démontable l'aligneur dentaire ; - les connecteurs et l'aligneur coopèrent de façon à appliquer au moins une contrainte de traitement sur au moins ladite dent lorsque l'appareil dentaire est porté par le patient. L'aligneur dentaire est formé d'une bande flexible profilée pour recouvrir la seule face linguale des dents en laissant libre les autres faces desdites dents. De plus, les connecteurs sont configurés pour se fixer contre la face linguale des dents. Et la bande flexible comprend des réservations dans lesquelles s'emboîtent de manière élastique les connecteurs.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- [Fig. 1] est une vue schématique en coupe transversale d'un appareil dentaire porté par un patient.
- [Fig. 2a] est une vue schématique en coupe transversale d'un aligneur dentaire adapté pour se positionner au niveau de l'arcade dentaire maxillaire d'un patient.
- [Fig. 2b] est une vue schématique en coupe transversale d'un aligneur dentaire adapté pour se positionner au niveau de l'arcade dentaire mandibulaire d'un patient.
- [Fig. 3a], [Fig. 3b] et [Fig. 3c] schématisent respectivement une vue schématique de face, une vue de profil et une vue de dessus d'un connecteur utilisé dans l'invention.
- [Fig. 4a], [Fig. 4b] et [Fig. 4c] schématisent respectivement une vue schématique de face, une vue de profil et une vue de dessus d'un connecteur utilisé dans l'invention, et sur lequel sont schématisé différentes zones de contrainte.
- [Fig. 5] illustre la mise en place d'un appareil dentaire au niveau de l'arcade dentaire mandibulaire et de l'arcade dentaire maxillaire d'un patient.
- [Fig. 6] est une vue schématique en coupe transversale d'un appareil dentaire porté par un patient, l'aligneur disposé au niveau de l'arcade dentaire maxillaire présentant une extension palatine en prise avec une vis d'ancrage.
- [Fig. 7] est une vue schématique en coupe transversale d'un aligneur dentaire utilisé dans l'appareil de la figure 6.
- [Fig. 8] est une vue schématique en coupe transversale d'un appareil dentaire selon un autre mode de réalisation, disposé au niveau de l'arcade dentaire mandibulaire d'un patient.
- [Fig. 9] est une vue schématique en coupe transversale d'une gouttière amovible utilisée dans l'appareil de la figure 8.
- [Fig. 10] illustre la mise en place d'un appareil dentaire selon un autre mode de réalisation, au niveau de l'arcade dentaire maxillaire d'un patient.
- [Fig. 11] est une vue schématique en coupe selon A-A de la figure 10.
- [Fig. 12a] et [Fig. 12b] illustrent l'utilisation d'un appareil dentaire comme support de dent provisoire.
- [Fig. 13a] et [Fig. 13b] sont des vues schématiques, respectivement de profil et de dessus, d'un connecteur selon une variante de réalisation.
- [Fig. 14] est une vue schématique en coupe transversale d'un appareil dentaire selon un autre mode de réalisation, disposé au niveau de l'arcade dentaire mandibulaire d'un patient.

### Description des modes de réalisation.

Par souci de clarté, les précisions suivantes sont apportées à certains termes utilisés dans la description et les revendications :
- « Face linguale » signifie la face dentaire orientée vers la langue (pour les dents de l'arcade mandibulaire) ou orientée vers le palais (pour les dents de l'arcade maxillaire).
- Tel qu'utilisé ici, sauf indication contraire, l'utilisation des adjectifs ordinaux « premier », « deuxième », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.
- De même, l'utilisation des adjectifs « droite/gauche », « devant/derrière » « haut/bas », etc, permet de décrire simplement la position d'un objet dans la configuration des figures annexées, mais n'implique pas nécessairement qu'en pratique, des objets similaires soient dans la même position.
- « X et/ou Y » signifie : X seul, ou Y seul, ou X et Y.
- D'une manière générale, on appréciera que les différents dessins ne sont pas dessinés à l'échelle d'une figure à l'autre ni à l'intérieur d'une figure donnée, et notamment que les objets peuvent être arbitrairement dessinés pour faciliter la lecture des dessins.

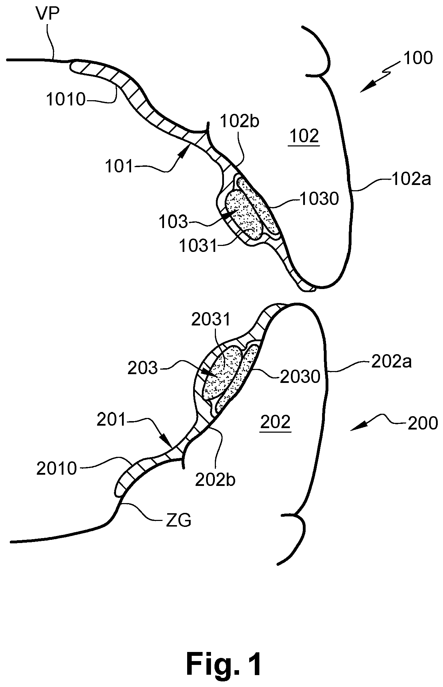

La figure 1 illustre un premier aligneur dentaire 101 qui coopère avec une première dent 102 d'une arcade dentaire maxillaire 100 et un deuxième aligneur dentaire 201 qui coopère avec une deuxième dent 202 d'une arcade dentaire mandibulaire 200. En pratique, chaque aligneur 101, 201 coopère avec une pluralité de dents, par exemple entre 2 et 16 dents. Selon la nature du traitement, seule une des deux arcades 100 ou 200 peut être équipée d'un aligneur. L'aligneur 101, 201 peut être utilisé pour déplacer une seule dent ou une pluralité de dents d'une arcade dentaire.

Les dents 102, 202 présentent une face vestibulaire 102a, 202a (orientée vers la joue ou la lèvre), une face linguale 102b, 202b, une face occlusale ou incisale (dessus), une face mésiale (vers l'avant) et une face distale (vers l'arrière). Selon une caractéristique, l'aligneur 101, 201 est formé d'une bande flexible profilée pour recouvrir les seules faces linguales 102b, 202b des dents. Toutes les autres faces des dents 102, 202 sont laissées libres, notamment les faces occlusales ou incisales, ce qui permet au patient de pouvoir manger en gardant l'aligneur 101, 201 en bouche.

Selon un mode de réalisation, cette bande flexible recouvre et est en contact avec la totalité des faces linguales 102b, 202b (sauf au niveau des connecteurs 103, 203) de sorte que des aliments ne peuvent pas venir s'insérer entre. Selon un autre mode de réalisation, cette bande flexible ne recouvre et n'est en contact qu'avec une partie seulement des faces linguales 102b, 202b, par exemple qu'avec la partie située entre le connecteur 103, 203 et la face occlusale ou incisale.

Selon un mode préféré de réalisation, l'aligneur 101, 201 est réalisé d'un seul tenant. Il peut toutefois être formé de plusieurs portions distinctes, chaque portion étant utilisée pour traiter spécifiquement le déplacement d'une ou plusieurs dents.

L'aligneur 101, 201 est avantageusement réalisé dans un matériau polymère transparent ou translucide de sorte qu'il n'est pas visible lorsqu'il est porté. Le matériau polymère utilisé peut par exemple appartenir à la famille suivante : polymère (méth)acrylate ; silicone ; polyester ; polyuréthane ; polycarbonate ; polyéthylène téréphtalate glycol (PETG) ; polypropylène ; éthylène-acétate de vinyle ; ou tout autre polymère approprié.

Selon un mode de réalisation, l'aligneur 101, 201 est obtenu par moulage, thermoformage, impression 3D ou tout autre procédé convenant à l'homme du métier.

D'une manière connue de l'homme du métier, la détermination des mouvements dentaires par l'aligneur 101, 201 peut commencer par une modélisation de la position initiale des dents, par exemple à l'aide d'une prise d'empreinte, ou préférentiellement d'un scan intra-oral permettant d'obtenir une modélisation numérique des arcades dentaires. Le plan de traitement définissant la séquence de déplacements dentaires jusqu'à une position finale souhaitée peut être déterminée par le praticien et/ou par un logiciel dédié du type le logiciel DeltaFace^{®} commercialisé par la société Coruo. Cette séquence va déterminer la configuration des aligneurs à chaque étape du plan de traitement. À chaque étape, les dents sont déplacées progressivement, par exemple de 0,1 mm à 0,2 mm dans différents plans de l'espace. Il peut y avoir entre 10 et 100 étapes et donc entre 10 et 100 modèles différents d'aligneurs. Au début de chaque étape du traitement, lorsqu'il est placé sur les dents, l'aligneur est ajusté à l'alignement intermédiaire (ou final) que les dents doivent avoir à la fin de ladite étape, de sorte que chaque modèle d'aligneur exerce une ou plusieurs contraintes sur lesdites dents à déplacer. La flexibilité de l'aligneur lui permet de se déformer élastiquement jusqu'à l'alignement que la dent a au début l'étape du traitement. En essayant de revenir à sa forme initiale (mémoire de forme), l'aligneur exerce une ou plusieurs contraintes sur les dents. Les dents s'ajustent alors progressivement à la forme de l'aligneur. Lorsque les dents sont parfaitement ajustées à la forme d'un aligneur, c'est-à-dire lorsque les dents ont été déplacées jusqu'à l'agencement prévu, la déformation de l'aligneur et donc la force de traitement associée, deviens plus petite, voire nulle. L'aligneur est alors changé pour passer à l'étape suivante du traitement. En pratique, il est fourni au patient un ensemble d'aligneurs, qu'il utilise séquentiellement à chaque étape du traitement, sans avoir besoin de consulter un praticien. A la fin du traitement, le dernier aligneur (ou un autre aligneur ajusté à l'alignement final) peut être utilisé à des fins de contention, lequel aligneur est alors passif, c'est-à-dire qu'il ne contraint aucune dent.

La flexibilité de l'aligneur 101, 201 dépend principalement de sa forme, de son matériau et de son épaisseur. Cette flexibilité correspond à la capacité de l'aligneur à se déformer de manière élastique et contrôlée, pour exercer une contrainte de traitement sur une ou plusieurs dents afin de la(les) déplacer.

Selon un mode de réalisation, l'épaisseur de l'aligneur 101, 201 est comprise entre 0,1 mm et 2 mm, avantageusement entre 0,5 mm et 1 mm, préférentiellement entre 0,6 mm et 0,8 mm. Cette épaisseur peut être constance ou au contraire variée de manière à ce que l'aligneur 101, 201 présente différentes portions ou zones d'épaisseur distincte ayant des modules d'élasticité différents. On peut ainsi adapter l'intensité de la contrainte qui sera appliquée sur telle ou telle dent à traiter. Un résultat similaire est obtenu en utilisant un aligneur formé d'une pluralité de portions ou de zones constituées de matériaux présentant des modules d'élasticité distincts. Chaque portion ou zone peut ainsi générer une contrainte dont l'intensité lui est propre.

L'aligneur 101, 201 est maintenu en position au moyen de connecteurs 103, 203 configurés pour se fixer contre la face linguale 102b, 202b des dents 102, 202. L'aligneur 101, 201 s'engage de manière démontable (manuellement et sans instrument) sur les connecteurs 103, 203 comme expliqué plus avant dans la description.

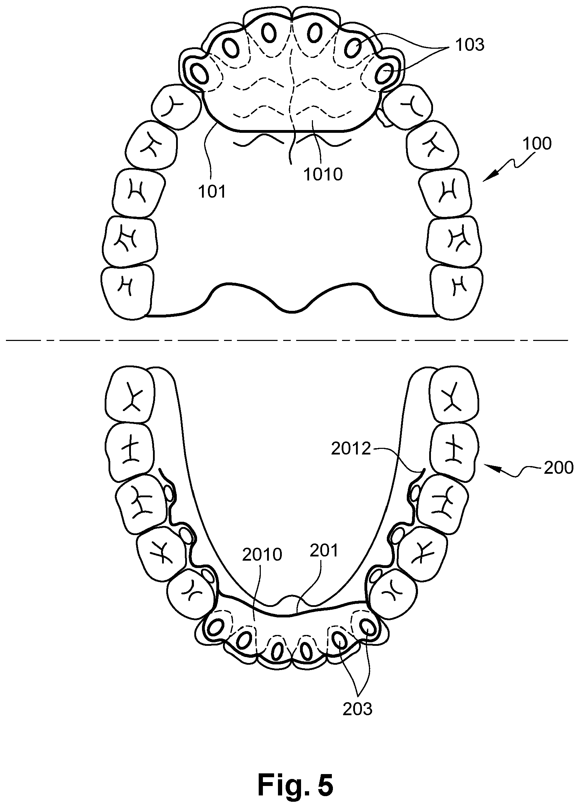

Les connecteurs 103 peuvent être fixés sur tout ou partie des dents d'une arcade dentaire. Sur l'exemple de la figure 5, au niveau de l'arcade maxillaire 100, les connecteurs 103 sont fixés sur la face linguale des incisives centrales, des incisives latérales et des canines, l'aligneur 101 étant positionné uniquement au niveau de ces dents. Au niveau de l'arcade 200, les connecteurs 203 sont fixés sur la face linguale des incisives centrales, des incisives latérales, des canines, des premières prémolaires, des secondes prémolaires et des premières molaires, l'aligneur 201 étant positionné uniquement au niveau de ces dents.

Les connecteurs 103, 203 peuvent être réalisés dans le même matériau polymère que l'aligneur 101, 201, ou dans un matériau distinct, par exemple en métal ou en céramique. Les connecteurs 103, 203 peuvent être obtenus par moulage, usinage, impression 3D, etc. Ils sont rigides, en ce sens qu'ils ne se déforment pas lorsqu'ils sont contraints par l'aligneur.

Pour simplifier leur conception et leur mise en place, tous les connecteurs 103, 203 sont avantageusement identiques en taille et en forme, quel que soit la dent sur laquelle ils sont fixés et, quelle que soit l'arcade dentaire où ils sont positionnés. On peut toutefois prévoir des tailles et/ou des formes de connecteurs différentes selon la dent et/ou selon l'arcade dentaire et/ou selon le type de contrainte à appliquer et/ou selon l'intensité de la contrainte à appliquer.

Selon un mode de réalisation, l'aligneur 101, 201 comprend un organe de préhension permettant au patient de facilement le saisir pour le désengager des connecteurs 103, 203. Sur la figure 5, cet organe de préhension 2012 se présente sous la forme d'une encoche conformée au niveau d'un ou plusieurs rebords ou au niveau de chaque (ou d'une seule) extrémité distale de l'aligneur 201. Cette encoche 2012 permet au patient d'y glisser un ongle ou un doigt pour désengager l'aligneur 201. L'organe de préhension 2012 peut se présenter sous une autre forme, par exemple sous la forme d'un élément en relief. L'organe de préhension 2012 peut être conformé en même temps que l'aligneur 101, 201 ou être rapporté sur celui-ci.

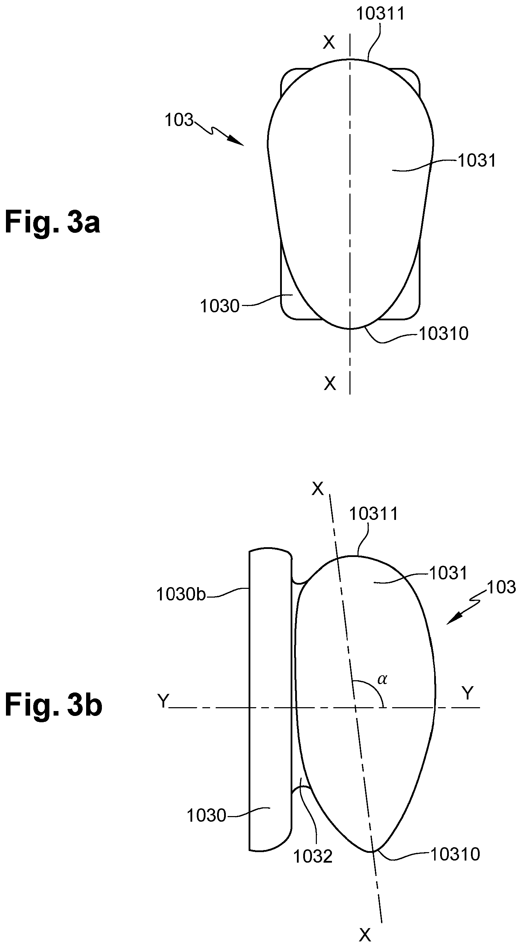

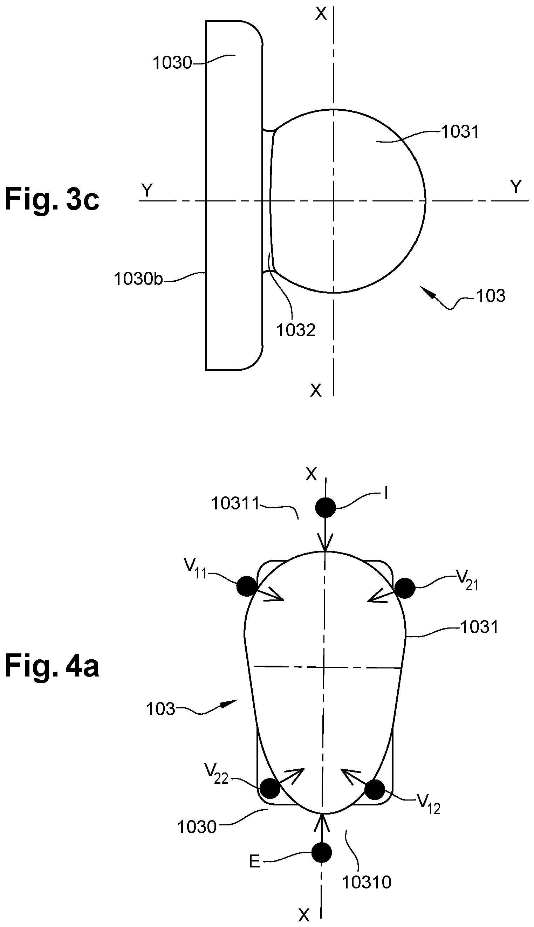

Les figures 3a, 3b et 3c illustrent un mode préféré de réalisation d'un connecteur 103 qui peut être utilisé de manière universelle, quelle que soit la dent, quelle que soit l'arcade dentaire et quel que soit le type et/ou l'intensité de contrainte à appliquer.

Ce connecteur 103 comprend une embase 1030 présentant une face de fixation 1030b adaptée pour se fixer contre la face linguale 102b, 202b d'une dent. Selon un mode de réalisation, l'embase 1030 a une forme rectangulaire ou sensiblement rectangulaire, dont la longueur est comprise entre 2 mm et 6 mm, la largeur est comprise entre 1 mm et 3 mm et l'épaisseur comprise entre 0,5 mm et 2 mm. L'embase 1030 peut toutefois avoir d'autres formes, par exemple une forme circulaire, ovale, polygonale, etc. La face de fixation 1030b peut être plane, mais présente préférentiellement une courbure adaptée à celle de la face linguale 102b, 202b. Selon un mode de réalisation, la fixation de l'embase 1030 sur la dent est réalisée par collage, par exemple au moyen d'une colle photo-polymérisable. La position des connecteurs 103, 203 est conservée pendant toute la durée du traitement de sorte qu'il n'est pas besoin de les changer à chaque étape.

Le connecteur 103 comprend également une tête de connexion 1301 qui est dans le prolongement de l'embase 1030. Sur les figures 3a, 3b et 3c, la tête de connexion 1301 est distante de l'embase 1030, par exemple éloignée de 0,5 mm à 2 mm, de sorte que le connecteur 103 présente une collerette 1032 reliant ladite embase de ladite tête. Cette collerette 1032 peut notamment permettre de recevoir une chainette ou un élastique permettant d'appliquer une contrainte sur le connecteur 103, lorsque ladite chainette ou ledit élastique est attaché à un autre connecteur, à une vis d'ancrage ou à un bouton orthodontique. Cette technique peut par exemple être utilisée pour tracter une dent incluse.

Sur les figures 3a, 3b et 3c, la tête de connexion 1031 a une forme d'ovoïde (ou en goutte d'eau ou en forme d'œuf) présentant un axe de symétrie longitudinal X-X, ou axe principal. À titre d'exemple, cette ovoïde est incluse dans une enveloppe parallélépipédique dont la longueur est comprise entre 2 mm et 6 mm, la largeur est comprise entre 1 mm et 6 mm et la profondeur comprise entre 1 mm et 6 mm.

En se rapportant à la figure 3b, l'axe de symétrie longitudinal X-X et la normale Y-Y à la face de fixation 1030b de l'embase 1030, forment avantageusement un angle α compris entre 10° et 90°, avantageusement entre 45° et 90° et préférentiellement entre 55° et 65°. Cette angulation de la tête de connexion 1031 ovoïde permet un contrôle très précis des déplacements dentaires, et plus particulièrement la version et le torque.

La tête de connexion 1031 ovoïde présente une extrémité 10310 qui est plus aiguë que l'autre extrémité opposée 10311. Pour contrôler les déplacements dentaires (notamment la version et le torque) avec une précision optimale, lorsque le connecteur 103 est fixé sur une dent, cette extrémité 10310 « en pointe » est préférentiellement dirigée vers la racine de ladite dent. De bons résultats peuvent toutefois être obtenus lorsque l'extrémité en pointe 10310 est dirigée vers la face occlusale ou incisale de la dent. Pour des déplacements dentaires tels qu'une rotation, l'extrémité en pointe 10310 peut être dirigée vers la face distale ou mésiale de la dent.

Après de multiples expérimentations, l'inventeur a constaté qu'un tel connecteur 103, notamment avec une tête de connexion 1031 ovoïde, présentant une angulation par rapport à l'embase 1030 et dont l'extrémité en pointe 10310 est dirigée vers la racine de la dent, permettait non seulement de déplacer les dents selon n'importe quelle trajectoire choisie, avec un contrôle très précis des déplacements dentaires selon les trois ordres, mais encore de régler avec précision l'intensité des contraintes appliquées sur les dents. Un tel connecteur 103 peut être qualifié d'universel dans la mesure où une seule forme et une seule orientation permettent de contrôler avec précision les six mouvements dentaires (version ou tipping, égression, ingression, rotation, torque, translation).

De bons résultats en termes de précision des déplacements dentaires et de réglage de l'intensité des contraintes, sont également obtenus lorsque la tête de connexion 1031 a une forme ellipsoïde allongée dont l'axe principal est l'axe de symétrie longitudinal X-X précité. Les deux extrémités 10310 et 10311 sont dans ce cas identiques et symétriques.

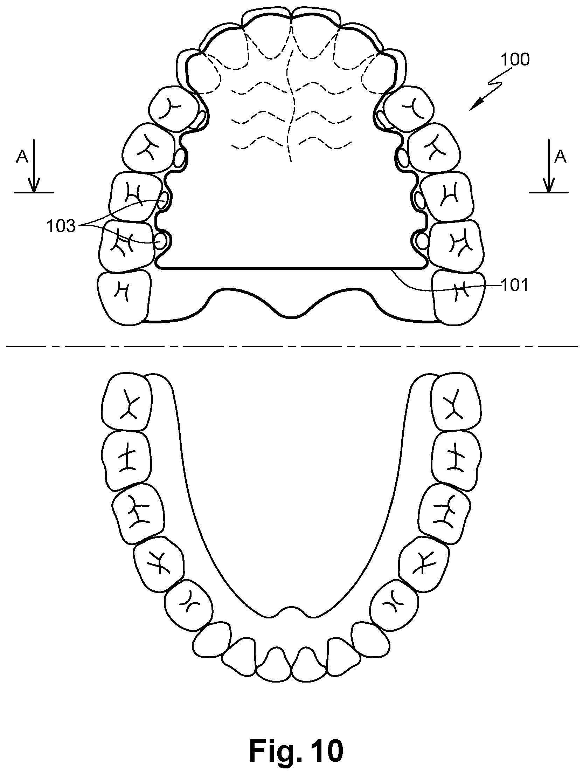

Selon d'autres modes de réalisation, et notamment dans les applications décrites plus avant dans la description en référence aux figures 10, 11 et 12a-12b, la tête de connexion 1031 peut avoir une forme ovoïde ou ellipsoïde allongée ou une autre forme et notamment une forme de sphère, de cube, de parallélépipède, de polyèdre, de prisme, de cône, de pyramide, de cylindre, etc. Elle peut encore consister en une combinaison de deux ou plusieurs de ces différentes formes.

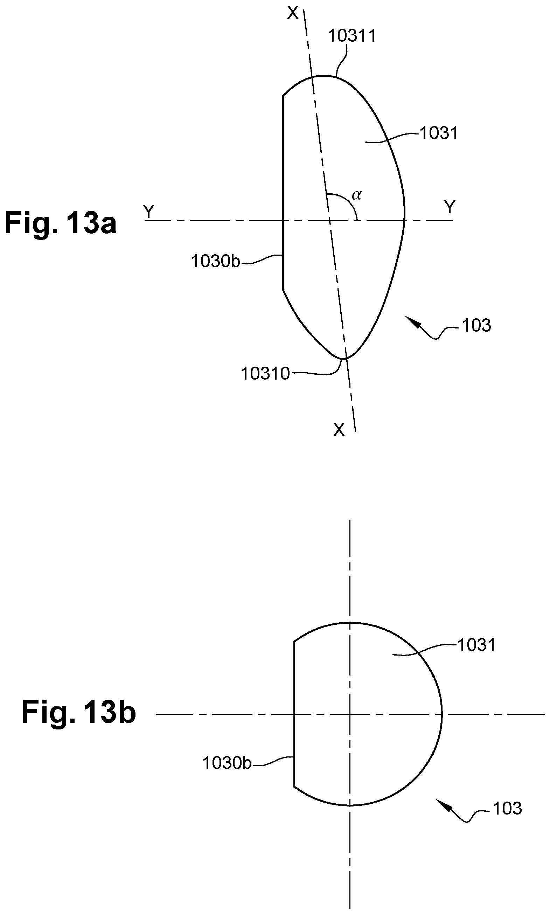

Dans la variante de réalisation des figures 13a et 13b, la face de fixation 1030b consiste en un méplat aménagé directement sur la tête de connexion 1031. Cette dernière est alors positionnée au plus près de la face linguale de la dent. Cette conception offre davantage de confort au patient dans la mesure où l'encombrement (notamment l'épaisseur et/ou la hauteur) du connecteur 103 est réduit en comparaison de celui des figures 3a, 3b et 3c. En outre, la tête de connexion 1031 étant moins en porte-à-faux en comparaison de celle des figures 3a, 3b et 3c, l'intensité et/ou la nature des contraintes appliquées sur la dent ne sont pas les mêmes.

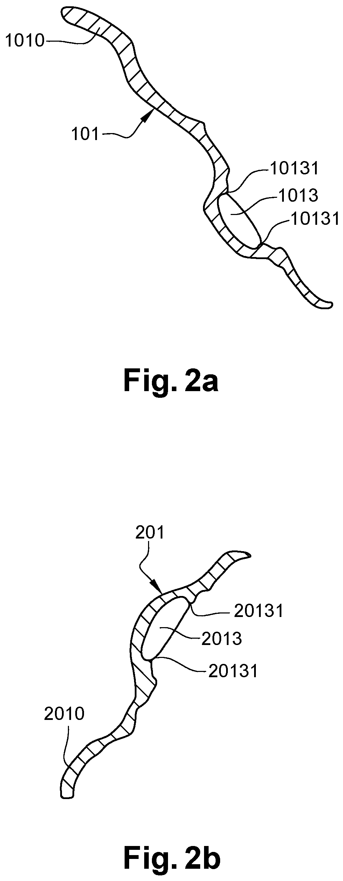

En se rapportant aux figures 1, 2a et 2b, chaque aligneur 101, 201 comprend des réservations 1013, 2013 dans lesquelles s'emboîtent de manière élastique les connecteurs 103, 203 et plus particulièrement les têtes 1031, 2031. Pour la mise en place de l'aligneur 101, 201, il suffit d'amener les réservations 1013, 2013 en vis-à-vis des têtes 1031, 2031 et de pousser manuellement (avec les doigts) lesdites réservations sur lesdites têtes. Les réservations 1013, 2013 forment des cavités (non débouchantes) dans lesquelles se logent les têtes 1031, 2031. Les réservations 1013, 2013 présentent une lèvre périphérique 10131, 20131 ou une autre forme en contre-dépouille qui se déforme lors de l'introduction et du retrait des connecteurs 103, 203. Après introduction des connecteurs 103, 203, la lèvre périphérique 10131, 20131 s'accouple avec la tête 1031, 2031. On note ici que des têtes 1031, 2031 en forme d'ovoïde ou d'ellipsoïde assurent un déboîtage manuel aisé et non douloureux de l'aligneur 101, 201, sans risque d'arracher les connecteurs 103, 203.

Lorsque les réservations 1013, 2013 sont emboîtées dans les connecteurs 103, 203 et que l'aligneur 101, 201 est en position, ledit aligneur vient exercer une ou plusieurs contraintes sur les têtes 1031, 2031 et éventuellement sur la face linguale des dents.

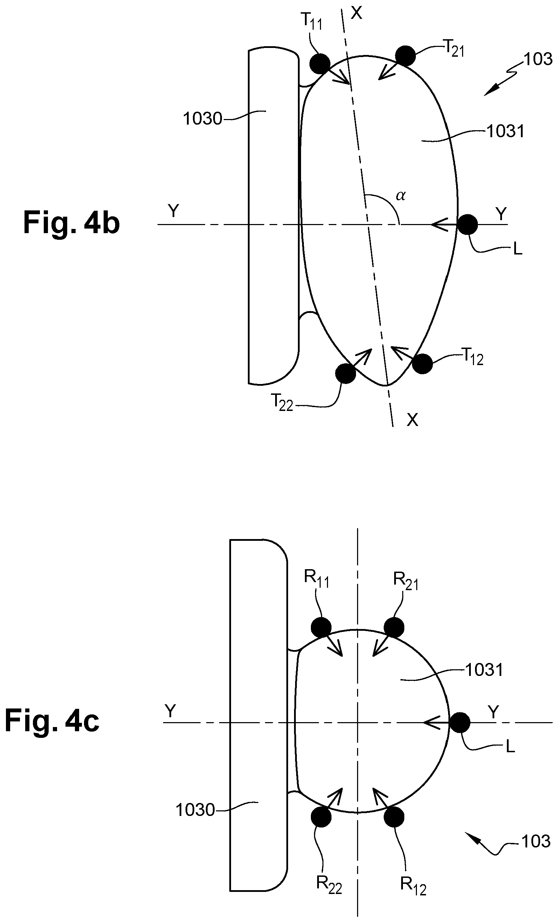

Les figures 4a, 4b et 4c illustrent différentes zones de contrainte d'un connecteur 103 schématisées par les points noirs. Ces zones de contrainte correspondent à des points ou des surfaces de la tête 1031 sur lesquels l'aligneur appuie et/ou exerce une pression. Ces pressions sont induites par la déformation élastique de l'aligneur durant l'étape de traitement concernée. En d'autres termes, l'aligneur vient appuyer sur une ou plusieurs zones localisées de la tête 1031. La localisation précise des zones de contraintes peut être déterminée par une configuration spécifique des réservations 1013, 2013 et/ou par la création de bossages conformés par moulage ou réalisés par ajout de matière (ex : résine) dans lesdites réservations. Dans la mesure où la réservation 1013, 2013 entoure et enserre la tête 1031, 2031 dans les trois dimensions, on peut facilement obtenir un contrôle tridimensionnel : chaque zone de la tête peut être contrainte.

Un mouvement d'ingression est obtenu en exerçant une pression dans la zone I (figure 4a), au niveau de l'extrémité 10311 (proche de la face occlusale ou incisale de la dent), selon le grand axe de la dent. Cette pression va générer une force axiale de sens apical qui tend à enfoncer la dent dans son alvéole.

A l'inverse, un mouvement d'égression est obtenu en exerçant une pression dans la zone E (figure 4a), au niveau de l'extrémité 10310 (proche de la racine la dent), selon le grand axe de la dent. Cette pression va générer une force axiale de sens occlusal qui tend à faire sortir la dent de son alvéole.

Un mouvement de version (tipping) est obtenu en exerçant une pression dans la zone V11 et/ou dans la zone V12 (figure 4a). Cette pression va provoquer une rotation de la couronne dans un sens mésio-distal autour d'un axe de rotation vestibulo-lingual. Et une pression exercée dans la zone V21 et/ou dans la zone V22 va provoquer une rotation inverse de la couronne dans le sens disto-mésial autour d'un axe vestibulo-lingual.

Un mouvement de torque est obtenu en exerçant une pression dans la zone T11 et/ou dans la zone T12 (figure 4b). Cette pression va provoquer une rotation de la couronne dans le sens vestibulo-lingual autour d'un axe mésio-distal. Et une pression exercée dans la zone T21 et/ou dans la zone T22 va provoquer une rotation inverse de la couronne, dans le sens lingo-vestibulaire autour d'un axe mésio-distal.

Un mouvement de rotation est obtenu en exerçant une pression dans la zone R11 et/ou dans la zone R12 (figure 4c). Cette pression va provoquer une rotation de la dent autour de son grand axe, dans le sens disto-mésial. Et une pression exercée dans la zone R21 et/ou dans la zone R22 va provoquer une rotation de la dent dans le sens mésio-distal autour de son grand axe.

Un mouvement de translation est obtenu en exerçant une pression dans la zone L (figures 4b et 4c). Cette pression va provoquer une translation de la couronne dans le sens lingo-vestibulaire. Un mouvement de translation similaire est obtenu en exerçant simultanément une pression dans les zones R21 et R12 (en complément ou en substitution d'une pression exercée dans la zone L). Et une pression exercée simultanément dans les zones R11 et R22 va provoquer une translation inverse de la dent dans le sens vestibulo-lingual.

Ces différents mouvements peuvent être combinés en exerçant simultanément des pressions dans différentes zones de la tête 1031. Par exemple, on peut combiner un mouvement de translation et un mouvement de rotation en exerçant simultanément une pression dans les zones **L,** R11 et R12. De même, on peut combiner un mouvement d'égression et un mouvement de version en exerçant simultanément une pression dans les zones E et V11. L'ensemble de ces différents mouvements dentaires peuvent en outre être amplifiés et/ou régler par des contraintes exercées par l'aligneur directement sur la face linguale des dents. On obtient alors simultanément des zones de contraintes distinctes sur les connecteurs et sur la face linguale des dents.

La forme ovoïde ou ellipsoïde de la tête 1031, combinée à l'orientation spécifique de ladite tête, permettent de fournir une infinité de zones de contraintes (ou zones de poussée) qui vont aider à orienter avec précision les forces de traitement exercées par l'aligneur, pour provoquer un ou plusieurs mouvements dentaires voulus. Les localisations des zones de contraintes choisies par le praticien permettent en outre de régler l'intensité des forces de traitement exercées par l'aligneur. Les déplacements dentaires, selon les trois ordres, sont ainsi réglés et contrôlés avec une grande précision.

Un tel connecteur va permettre de transmettre avec précision à la dent, les forces de traitement générées par l'aligneur. Le connecteur s'apparente à une sorte de manette de commande ou joystick permettant de contrôler les mouvements de la dent sur lequel il est fixé. Selon une autre analogie, la tête de connexion est un avatar de la dent sur lequel le connecteur est fixé : les effets des contraintes appliquées sur la tête vont se répercuter directement sur la dent.

Les connecteurs 103, 203 sont fixés sur plusieurs dents d'une arcade. Mais l'aligneur 101, 201 ne va pas nécessairement appliquer des contraintes de traitement sur l'ensemble de ces dents. En effet, seules certaines de ces dents nécessitent d'être repositionnées tandis que d'autres serviront d'ancrages pour maintenir en place l'aligneur 101, 201 lorsqu'il applique les contraintes contre la ou les dents à repositionner.

Pour que l'aligneur 101, 201 puisse exercer des contraintes de traitement avec une intensité suffisante sur les connecteurs 103, 203 sur lesquels il s'emboîte et/ou sur les dents, il doit prendre appui contre une surface (loi d'action-réaction). Les surfaces en contact avec l'aligneur sont celles des faces linguales 102b, 202b et celles des têtes de connexion 1031, 2031. Les connecteurs 103, 203 permettent donc d'augmenter la surface de contact globale. Toutefois, cette surface de contact globale est bien moindre que celle d'un aligneur classique du type gouttière Invisalign^{®} qui recouvre, en plus des faces linguales 102b, 202b, les faces occlusales, incisales et vestibulaires des dents. À module d'élasticité équivalent, l'aligneur 101, 201 est donc susceptible d'exercer des contraintes de traitement de moindre intensité sur les connecteurs 103, 203 et/ou sur les dents que des gouttières Invisalign^{®}. Cela peut être problématique selon la nature des mouvements dentaires à effectuer, par exemple des mouvements de translation ou de rotation.

Pour résoudre cette problématique, une solution consiste à utiliser un aligneur 101, 201 ayant un module d'élasticité augmenté, par exemple en utilisant un matériau plus rigide et/ou en augmentant l'épaisseur desdits aligneurs. Cette solution présente toutefois l'inconvénient d'être particulièrement douloureuse et inconfortable pour le patient dans la mesure où l'intensité des contraintes peut être relativement élevée localement.

Aussi, une solution préférée consiste à conformer l'aligneur 101, 201 pour qu'il présente une zone d'appui supplémentaire. Cette zone d'appui supplémentaire joue le rôle d'un levier qui va augmenter l'intensité des contraintes exercées par l'aligneur 101, 201. Sur les figures 1, 2a, 2b et 5, l'aligneur 101 présente une extension palatine 1010 configurée pour, en usage, venir en appui contre tout ou partie de la voute palatine VP du patient. Selon un mode de réalisation, l'extension palatine 1010 s'étend au-delà de la zone gingivale, par exemple sur 0,5 cm à 2 cm, pour recouvrir tout ou partie des crêtes palatines (largeur inter-canine par exemple). À titre d'exemple, la surface de l'extension palatine 1010 est comprise entre 1 cm² et 3 cm². De même, l'aligneur 201 présente une extension gingivale 2010 configurée pour, en usage, venir en appui contre une zone gingivale ZG du patient. Selon un mode de réalisation, l'extension gingivale 1010 recouvre la zone gingivale sur un arc dont la longueur est comprise entre 1 cm et 4 cm (ex : un arc inter-canine) et jusqu'à la jonction muco-gingivale. La surface de cette extension gingivale 2010 est par exemple comprise entre 0,5 cm² et 2 cm².

Cette solution présente l'avantage de conserver un aligneur 101, 201 relativement fin et souple, ne générant pas de contraintes excessives, et de fait particulièrement confortable pour le patient.

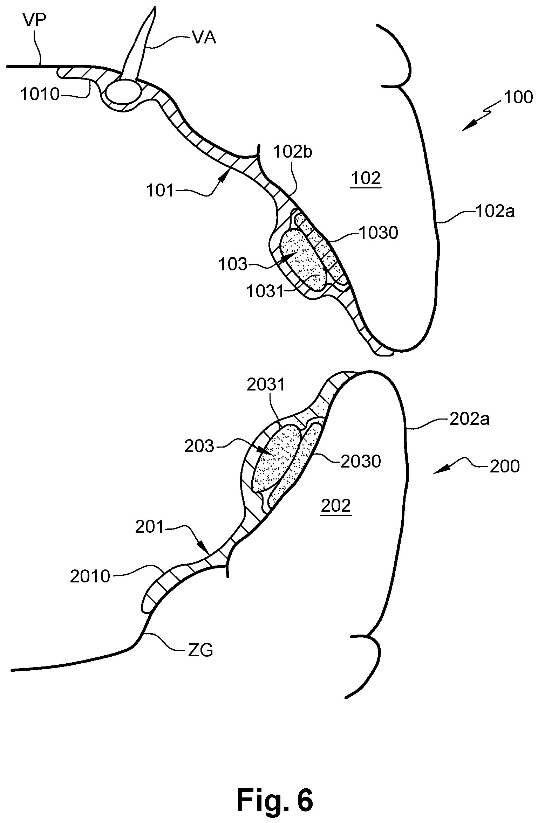

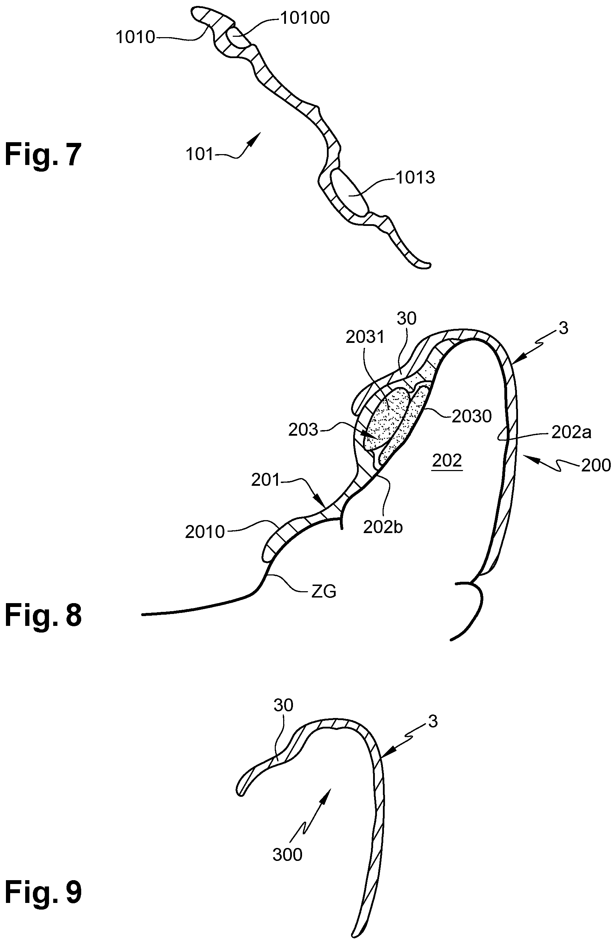

Selon un mode de réalisation illustré sur la figure 6, l'extension palatine 1010 est en prise avec une vis d'ancrage VA installée dans le palais du patient. L'extension palatine 1010 présente à cet effet une réservation 10100 (figure 7) dans laquelle s'emboîte la tête de la vis VA. L'aligneur 101 bénéficie ainsi d'un point d'ancrage supplémentaire permettant d'augmenter encore davantage l'intensité des contraintes. Une configuration similaire peut être envisagée au niveau de l'extension gingivale 2010.

Le mode de réalisation illustré sur les figures 8 et 9, permet d'amplifier davantage la contrainte exercée par l'aligneur 201 sur les têtes de connexion 2031 et/ou sur les faces linguales 202b des dents à déplacer. Dans ce mode de réalisation, une gouttière 3 amovible est profilée pour recouvrir des dents du patient. Cette gouttière 3 présente une portion 30 qui s'engage sur au moins une partie de l'aligneur 201 de façon à appliquer sur ledit aligneur au moins une force tendant à le contraindre vers la face linguale 202b des dents 202 qu'il recouvre et qui doivent être déplacées. La gouttière 3 est avantageusement réalisée dans le même matériau que l'aligneur 201, et présente la même épaisseur ou une épaisseur sensiblement équivalente, de sorte qu'elle est flexible. Cette gouttière 3 peut aussi bien être placée au niveau de l'arcade mandibulaire pour recouvrir l'aligneur 201 qu'au niveau de l'arcade maxillaire pour recouvrir l'aligneur 101. La gouttière 3 étant adaptée à la forme de l'aligneur 201, il y a autant de gouttières que d'aligneurs dans la séquence de traitement.

À l'instar d'une gouttière de type Invisalign^{®}, la gouttière 3 présente une cavité de réception 300 qui s'adapte aux dents, par exemple à toutes les dents de l'arcade dentaire sur laquelle elle est positionnée. La gouttière 3 peut ainsi recouvrir la face vestibulaire 202a et la face occlusale/incisale de ces dents. Parmi ces dents, celles qui ne coopèrent pas avec l'aligneur 201, la gouttière 3 vient également recouvrir leur face linguale. Et pour celles qui coopèrent avec l'aligneur 201, la portion 30 vient recouvrir au moins une partie dudit aligneur. Sur la figure 8, la portion 30 vient recouvrir l'aligneur 201 jusqu'au connecteur 203. Elle pourrait toutefois s'étendre au-delà, jusqu'au niveau de la gencive. De par la flexibilité de la gouttière 3, la portion 30 agit comme une pince sur l'aligneur 201, ce qui va amplifier la contrainte exercée sur les têtes de connexion 2031 et/ou sur les faces linguales 202b des dents à déplacer.

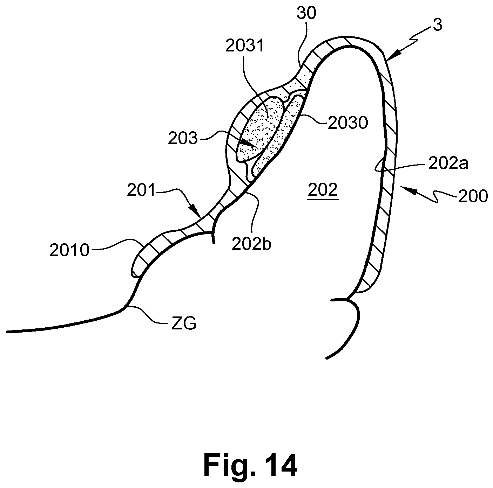

Sur la figure 14, la portion 30 ne vient pas recouvrir l'aligneur 201 mais est complémentaire de ce dernier. Ainsi, les dents avec lesquelles coopèrent l'aligneur 201 ont : - la majeure partie (par exemple entre 80% et 95%) de leur face linguale recouverte par ledit aligneur ; - et l'autre partie de leur face linguale, leur face occlusale/incisale et leur face vestibulaire recouvertes par la gouttière 3. La portion 30 peut venir recouvrir une petite partie de la face linguale, formant un retour lingual qui s'étend sur quelques millimètres (par exemple de 1 mm à 5 mm) du bord occlusal/incisal de la dent. La gouttière 3 agit ainsi sur les dents (en leur appliquant une contrainte depuis la face vestibulaire) mais pas sur l'aligneur 201. Cette conception est particulièrement avantageuse d'un point de vue fabrication. En effet, il suffit de concevoir l'aligneur 201 et la gouttière 3 en une seule pièce monobloc (par exemple par thermoformage) et de découper ensuite ledit aligneur (par exemple par découpe laser) pour le désolidariser de ladite gouttière. Ces deux éléments sont ainsi obtenus très simplement et à moindres coûts.

Il est à noter que cette gouttière 3 n'est absolument pas essentielle, dans la mesure où l'aligneur lingual 101, 201 donne de très bons résultats lorsqu'il est utilisé seul. La gouttière 3 n'est qu'un simple accessoire, qui est essentiellement utilisé la nuit. Elle peut également être utilisée de manière passive (sans contraindre l'aligneur et/ou les dents), comme accessoire de contention en fin de traitement.

Des appareils orthodontiques tels que des disjoncteurs ou des quad'hélix sont couramment utilisés pour agrandir une mâchoire trop étroite. La force exercée par ces appareils permet au palais de s'élargir pour que toutes les dents évoluent correctement. Ces appareils sont généralement contraignants dans la mesure où leur mise en place peut être relativement complexe. Et dans le cas d'un quad'hélix, l'activation et le réglage sont réalisés par le praticien à chaque visite. Seul le praticien peut modifier l'appareil, ce qui est particulièrement contraignant. Un appareil dentaire selon un mode de réalisation non couvert par la présente invention, permet de résoudre ces problèmes.

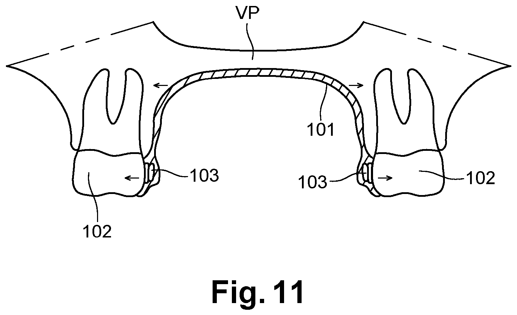

Sur les figures 10 et 11, les connecteurs 103 sont fixés sur la face linguale des molaires et prémolaires de manière à s'assurer que la tenue aux dents est optimale. Ils peuvent toutefois être fixés uniquement sur les molaires ou sur d'autres dents.

L'aligneur se présente maintenant sous la forme d'une plaque palatine 101 qui recouvre le palais et qui s'engage de manière démontable (manuellement et sans instrument) sur les connecteurs 103 comme expliqué précédemment. La plaque 101 n'a plus pour fonction d'aligner les dents, mais d'élargir le palais (plaque d'expansion maxillaire). En effet, les connecteurs 103 et la plaque 101 coopèrent de façon à appliquer au moins une contrainte sur les dents qui tend à écarter le palais dans un sens transversal.

Similaire à l'aligneur décrit précédemment, la plaque 101 est une plaque flexible profilée pour recouvrir la seule face linguale 102b, 202b des dents en laissant libres les autres faces desdites dents. Elle recouvre également la voute palatine VP. La plaque 101 comprend des réservations dans lesquelles s'emboîtent de manière élastique les connecteurs 103.

En se rapportant à la figure 9, la plaque flexible 101 appui sur la voute palatine VP et agit comme un ressort ou un vérin. La force (schématisée par les flèches) exercée par la plaque flexible 101 sur la voute palatine VP et sur les connecteurs 103 et les dents 102 est orientée le sens lingo-vestibulaire, ce qui permet un écartement du palais.

Selon un mode de réalisation, la plaque flexible 101 est en appui contre la face linguale de plusieurs dents d'un quadrant ou demie-arcade. Et éventuellement des dents qui ne sont pas pourvues d'un connecteur 103, comme par exemple les incisives et les canines sur la figure 10. Il en résulte que la plaque flexible 101 permet un écartement du palais dans une direction transversale et en même temps dans une direction sagittale, c'est-à-dire un écartement courbe ou en éventail. Cela est particulièrement avantageux lorsque l'appareil est porté par un enfant en période de croissance dont la croissance normale du maxillaire s'effectue dans toutes les directions et pas seulement dans la direction transversale. Si seul un écartement du palais dans une direction transversale est souhaité, la plaque flexible 101 peut être configurée pour ne contraindre que les molaires.

La plaque 101 s'emboîtant et se démontant facilement et manuellement des connecteurs 103, le patient peut gérer seul son traitement. Mis à part la mise en place des connecteurs 103, le praticien n'a pas besoin d'intervenir. Le patient dispose d'une série de plaque 101 permettant, à chaque étape, d'écarter progressivement le palais, par exemple de 0,1 mm à 0,2 mm. Chaque plaque est de plus en plus large pour élargir le palais. Il peut y avoir entre 10 et 100 étapes et donc entre 10 et 100 modèles différents de plaque 101. Au début de chaque étape, lorsqu'il est placé sur le palais et engagé dans les connecteurs, la plaque 101 est ajustée à la configuration intermédiaire (ou finale) que l'arcade maxillaire doit avoir à la fin de ladite étape, de sorte que chaque modèle de plaque 101 exerce des contraintes sur les dents qui tendent à élargir le palais. La flexibilité de la plaque 101 lui permet de se déformer élastiquement jusqu'à la configuration que l'arcade a au début l'étape du traitement. En essayant de revenir à sa forme initiale (mémoire de forme), la plaque 101 exerce des contraintes sur l'arcade maxillaire. L'arcade maxillaire et le palais s'ajustent alors progressivement à la forme de la plaque 101. Lorsque l'arcade maxillaire et le palais sont parfaitement ajustés à la forme d'une plaque 101, celle-ci est changée pour passer à l'étape suivante du traitement. Le traitement peut durer de 1 à 6 mois et les plaques 101 changées 1 ou 2 fois par mois.

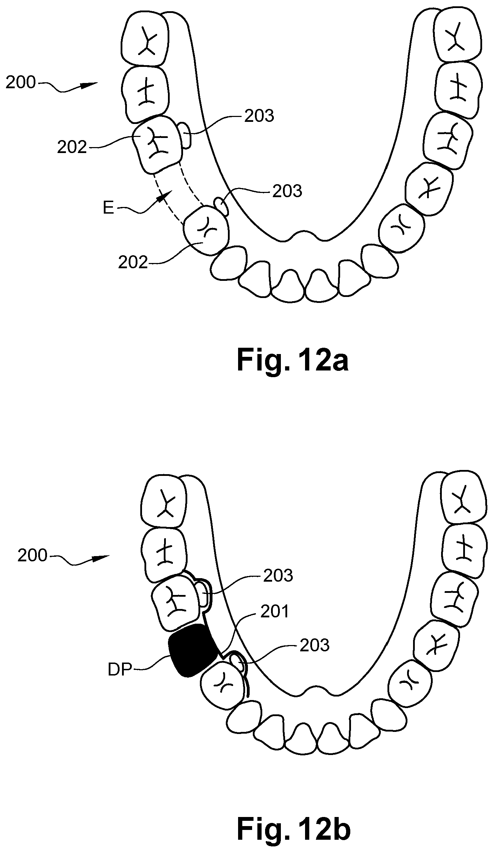

Sur la figure 12a, des connecteurs 203 sont fixés sur la face linguale des dents 202 qui encadrent un espace E laissé libre au niveau du site d'implantation d'un implant. À titre d'exemple, si l'implant en mit en place au niveau de deuxième prémolaire, les connecteurs 203 sont fixés sur la face linguale de la première prémolaire et de la première molaire. L'espace E peut également être laissé libre par une dent manquante. Les connecteurs 203 sont similaires aux connecteurs 103 décrits précédemment.

En se rapportant à la figure 12b, le dispositif selon l'invention comprend une bande support 201 sur laquelle est fixée une prothèse dentaire DP. De manière classique, cette prothèse DP est réalisée en résine et/ou en céramique. Elle est obtenue par moulage, usinage ou impression 3D.

La fixation de la prothèse DP sur la bande support 201 peut être réalisée par collage, soudage, emboîtage, ou toute autre méthode convenant à l'homme du métier. Selon le mode de réalisation de la figure 12b, la face linguale de la prothèse DP est collée sur la bande support 201. Selon une variante de réalisation, la prothèse DP et la bande support 201 sont une seule et même pièce unitaire obtenue par moulage, usinage ou impression 3D.

Comme pour l'aligneur décrit précédemment, la bande support 201 s'engage sur les connecteurs 203. Elle se présente sous la forme d'une plaque flexible ou rigide, profilée pour recouvrir la seule face linguale des dents en laissant libres les autres faces desdites dents. Elle comprend des réservations dans lesquelles s'emboîtent de manière élastique les connecteurs 203. Les caractéristiques de cette bande support 201 sont similaires à celles de l'aligneur 101 décrit précédemment.

Lorsque la bande support 201 est emboîtée sur les connecteurs 203, la prothèse DP vient combler l'espace E. La bande 201 n'a plus pour fonction d'aligner les dents, mais de supporter la prothèse DP. Elle permet également d'éviter que les dents se déplacent et maintient l'espace E, par exemple en vue de la future implantation ou de l'éruption d'une dent définitive chez l'enfant. Elle permet en outre de maintenir l'occlusion en maintenant la dent antagoniste en position verticale tout en évitant une régression de celle-ci. La bande support 201 se retrouvant cachée derrière les dents et la prothèse DP, cette solution est particulièrement esthétique. En outre, la bande support 201 s'engageant de manière démontable (manuellement et sans instrument) sur les connecteurs 203, la mise en place et le retrait de la prothèse DP se font très facilement. La prothèse DP peut être simplement provisoire et être notamment retirée dès la fin de la période de cicatrisation, au moment de la mise en place du pilier et de la prothèse définitive. La prothèse DP peut également être maintenu en place sur une plus longue durée, et faire office de prothèse définitive (à moindre coût), par exemple dans le cas où le patient ne souhaite pas poursuivre l'opération après la mise en place de l'implant.

Dans la mesure où la bande 201 n'a plus pour fonction d'aligner les dents, il est avantageux qu'elle soit passive lorsqu'elle est installée sur les connecteurs 203. Par « passive », on entend que la bande 201 n'exerce pas de contraintes de déplacement (ou le minimum possible) sur les dents 202 qui encadrent l'espace E. Pour obtenir ce résultat, il apparaît avantageux d'utiliser des connecteurs 203 dont la tête de connexion est de forme sphérique. Les contraintes tridimensionnelles exercées par de tels connecteurs sur les dents 202 sont alors nulles, ou à tout le moins fortement réduites.

L'agencement des différents éléments et/ou moyens et/ou étapes de l'invention, dans les modes de réalisation décrits ci-dessus, ne doit pas être compris comme exigeant un tel agencement dans toutes les implémentations. D'autres variantes peuvent être prévues. Notamment, la bande support 201 peut être solidaire de plusieurs prothèses dentaires adjacentes ou pas.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques.

## Revendications

1. Dispositif de support de prothèse dentaire (DP) **caractérisé en ce qu'il** comprend :
- une bande support (101, 201) solidaire d'une prothèse dentaire (DP) ;
- des connecteurs (103, 203) adaptés pour, en usage, se fixer sur des dents (102, 202) d'un patient qui encadrent un espace dentaire libre (E) et sur lesquels s'engage de manière démontable la bande support (101, 201) de sorte que la prothèse dentaire (DP) vienne combler ledit espace ;
- la bande support (101, 201) est profilée pour recouvrir la seule face linguale (102b, 202b) desdites dents en laissant libre les autres faces desdites dents ;
- les connecteurs (103, 203) sont configurés pour se fixer contre la face linguale (102b, 202b) desdites dents ;
- la bande support (101, 201) comprend des réservations (1013, 2013) dans lesquelles s'emboîtent de manière élastique les connecteurs (103, 203).

2. Dispositif selon la revendication 1, dans lequel la prothèse dentaire (DP) est fixée sur la bande support (101, 201) par collage, soudage ou emboîtage.

3. Dispositif selon la revendication 1, dans lequel la prothèse dentaire (DP) présente une face linguale qui est collée sur la bande support (101, 201).

4. Dispositif selon la revendication 1, dans lequel la prothèse dentaire (DP) et la bande support (101, 201) sont une seule et même pièce unitaire moulée, usinée ou imprimée 3D.

5. Dispositif selon l'une des revendications précédentes, dans lequel chaque connecteur (103, 203) comporte une tête de connexion (1301) de forme sphérique.

6. Dispositif selon l'une des revendications précédentes, dans lequel chaque connecteur (103, 203) comporte :
- une embase (1030, 2030) présentant une face de fixation (1030b) adaptée pour se fixer contre la face linguale (102b, 202b) d'une dent,
- une tête de connexion (1031, 2031) dans le prolongement de l'embase (1030, 2030) et dans laquelle s'emboîte une des réservations (1013, 2013) de la bande support (101, 201).

7. Dispositif selon la revendication 6, dans lequel la tête de connexion (1301) est distante de l'embase (1030), une collerette (1032) reliant ladite embase de ladite tête.

8. Dispositif selon l'une des revendications 1 à 4, dans lequel chaque connecteur (103, 203) comporte :
- une tête de connexion (1031, 2031) dans laquelle s'emboîte une des réservations de la bande support (101, 201),
- une face de fixation (1030b) adaptée pour se fixer contre la face linguale (102b, 202b) d'une dent,
∘ la face de fixation (1030b) consiste en un méplat aménagé sur la tête de connexion (1031, 2031).

9. Dispositif selon l'une des revendications 6 à 8, dans lequel la tête de connexion (1031, 2031) a l'une des formes suivantes : ovoïde, ellipsoïde allongée, sphère, cube, parallélépipède, polyèdre, prisme, cône, pyramide, cylindre ; ou consiste en une combinaison de deux ou plusieurs de ces différentes formes.

10. Dispositif selon l'une des revendications précédentes, dans lequel la bande support (101, 201) est flexible.

11. Dispositif selon l'une des revendications précédentes, dans lequel la bande support (101, 201) est rigide.

12. Dispositif selon l'une des revendications précédentes, dans lequel la bande support (101, 201) présente des portions ou zones présentant des modules d'élasticité distincts.

## Patentansprüche

1. Zahnprothesenstützvorrichtung (DP), **dadurch gekennzeichnet, dass** sie Folgendes umfasst:
- ein Trägerband (101, 201), das mit einer Zahnprothese (DP) verbunden ist;
- Verbinder (103, 203), die geeignet sind, sich im Gebrauch an Zähnen (102, 202) eines Patienten zu befestigen, die einen freien Zahnraum (E) umrahmen und an denen das Trägerband (101, 201) demontierbar eingerastet wird, so dass die Zahnprothese (DP) den Raum füllt;
- das Trägerband (101, 201) aus einem profilierten flexiblen Profilband gebildet ist, um die einzige linguale Seite (102b, 202b) der Zähne abzudecken, wobei die anderen Seiten der Zähne frei bleiben;
- die Verbinder (103, 203) so eingerichtet sind, dass sie an der lingualen Seite (102b, 202b) der Zähne befestigt werden;
- das Trägerband (101, 201) Aussparungen (1013, 2013) umfasst, in die die Verbinder (103, 203) elastisch einrasten.

2. Vorrichtung nach Anspruch 1, wobei die Zahnprothese (DP) auf dem Trägerband (101, 201) durch Kleben, Schweißen oder Einrasten befestigt ist.

3. Vorrichtung nach Anspruch 1, wobei die Zahnprothese (DP) eine linguale Seite aufweist, die auf das Trägerband (101, 201) geklebt ist.

4. Vorrichtung nach Anspruch 1, wobei die Zahnprothese (DP) und das Trägerband (101, 201) ein und dasselbe Einheitsteil sind, das gegossen, bearbeitet oder 3D-gedruckt wird.

5. Vorrichtung nach einem der vorhergehenden Ansprüche, wobei jeder Verbinder (103, 203) einen kugelförmigen Verbindungskopf (1301) umfasst.

6. Prothese nach einem der vorhergehenden Ansprüche, wobei jeder Verbinder (103, 203) Folgendes umfasst:
- eine Basis (1030, 2030) mit einer Befestigungsfläche (1030b), die geeignet ist, sich an der lingualen Seite (102b, 202b) eines Zahns zu befestigen,
- einen Verbindungskopf (1031, 2031) in der Verlängerung der Basis (1030, 2030) und in den eine der Aussparungen (1013, 2013) des Trägerbandes (101, 201) einrastet.

7. Prothese nach Anspruch 6, wobei der Verbindungskopf (1301) von der Basis (1030) entfernt ist, wobei ein Flansch (1032) die Basis mit dem Kopf verbindet.

8. Prothese nach einem der Ansprüche 1 bis 4, wobei jeder Verbinder (103, 203) Folgendes umfasst:
- einen Verbindungskopf (1031, 2031), in den eine der Aussparungen des Trägerbandes (101, 201) einrastet,
- eine Befestigungsfläche (1030b), die geeignet ist, sich an der lingualen Seite (102b, 202b) eines Zahns zu befestigen,
∘ die Befestigungsfläche (1030b) besteht aus einer Abflachung, die auf dem Verbindungskopf (1031, 2031) angeordnet ist.

9. Vorrichtung nach einem der Ansprüche 6 bis 8, wobei der Verbindungskopf (1031, 2031) eine der folgenden Formen aufweist: oval, ellipsoidisch gestreckt, Kugel, Würfel, Quader, Polyeder, Prisma, Kegel, Pyramide, Zylinder oder eine Kombination aus zwei oder mehr dieser verschiedenen Formen.

10. Vorrichtung nach einem der vorhergehenden Ansprüche, wobei das Trägerband (101, 201) flexibel ist.

11. Vorrichtung nach einem der vorhergehenden Ansprüche, wobei das Trägerband (101, 201) starr ist.

12. Vorrichtung nach einem der vorhergehenden Ansprüche, wobei das Trägerband (101, 201) Abschnitte oder Bereiche mit unterschiedlichen Elastizitätsmodulen aufweist.

## Claims

1. A dental prosthesis support device (DP) **characterised in that** it comprises:
- a support strip (101, 201) secured to a dental prosthesis (DP) ;
- connectors (103, 203) designed, when in use, to be attached to teeth (102, 202) of a patient that enclose a dental free space (E) and on which the support strip (101, 201) detachably engages so that the dental prosthesis (DP) fills said space;
- the support strip (101, 201) is profiled so as to cover only the lingual surface (102b, 202b) of said teeth leaving the other surfaces of said teeth free;
- the connectors (103, 203) are configured to be attached against the lingual surface (102b, 202b) of said teeth;
- the support strip (101, 201) comprises pockets (1013, 2013) into which the connectors (103, 203) fit elastically.

2. The device according to claim 1, wherein the dental prosthesis (DP) is attached to the support strip (101, 201) by gluing, welding or interlocking.

3. The device according to claim 1, wherein the dental prosthesis (DP) has a lingual surface that is glued on the support strip (101, 201).

4. The device according to claim 1, wherein the dental prosthesis (DP) and the support strip (101, 201) are made into one single and the same moulded, machined or 3D-printed unitary part.

5. The device according to one of the preceding claims, wherein each connector (103, 203) includes a spherical shaped connection head (1301).

6. The device according to one of the preceding claims, wherein each connector (103, 203) includes:
- a base (1030, 2030) having an attachment face (1030b) designed to be attached against the lingual surface (102b, 202b) of a tooth,
- a connection head (1031, 2031) as an extension of the base (1030, 2030) and into which one of the pockets (1013, 2013) of the support strip (101, 201) fits.

7. The device according to claim 6, wherein the connection head (1301) is distant from the base (1030), a collar (1032) connecting said base of said head.

8. The device according to one of claims 1 to 4, wherein each connector (103, 203) includes:
- a connection head (1031, 2031) into which one of the pockets of the support strip (101, 201) fits,
- an attachment face (1030b) designed to be attached against the lingual surface (102b, 202b) of a tooth,
∘ the attachment face (1030b) consists of a land formed on the connection head (1031, 2031).

9. The device according to one of claims 6 to 8, wherein the connection head (1031, 2031) has one of the following shapes: ovoid, elongated ellipsoid, sphere, cube, parallelepiped, polyhedron, prism, cone, pyramid, cylinder; or consists of a combination of two or more of these different shapes.

10. The device according to one of the preceding claims, wherein the support strip (101, 201) is flexible.

11. The device according to one of the preceding claims, wherein the support strip (101, 201) is rigid.

12. The device according to one of the preceding claims, wherein the support strip (101, 201) has portions or areas having distinct moduli of elasticity.
